# EUROPEAN PATENT APPLICATION

(11) **EP 0 880 208 A1**
(43) Date of publication of application: **25.11.1998**
(21) Application number: 98107529.4
(22) Date of filing: 24.04.1998
(51) Int. Cl.: H02B 1/20

(54) **Modular wiring unit**

(30) Priority: 20.05.1997 IT MI971172
(71) Applicant: GEWISS S.p.A., I-24069 Cenate Sotto (Bergamo) (IT)
(72) Inventor: Bosatelli, Domenico, 24069 Cenate Sotto, Bergamo (IT)
(74) Representative: Forattini, Amelia

(57) **Abstract**

A modular quick wiring unit for electrical boards and the like includes a plate (1) which has a first plurality of recesses (4) and a second plurality of recesses (17) for connection to an electrical distribution line, by means of a first plug (5), and to an adjacent plate, and a third plurality of recesses (6) for connection, by means of a second plug (13), to an electrical outlet (3), for the connection of the electrical outlet to the electrical distribution line, the number of the recesses being equal to the number of conductors branched off the electrical distribution line.

## Description

The present invention relates to a modular quick wiring unit particular suitable for use in electrical boards.

It is known that home and industrial electrical outlets are usually connected to a distribution line by using terminal strips after the automatic breaker that acts as protection against short circuits. The terminal strips allow to branch the various wires (usually five: positive, negative, phase, neutral and ground) which are then connected to the outlet.

If multiple outlets are connected to the same terminal strip, the outlets must be at a certain mutual distance which is preset according to the applicable statutory provisions for safety purposes.

The individual outlets are wired to the terminal strip by manually inserting the individual conducting wires in the terminals of the terminal strip at one end and in corresponding terminals of the outlet at the other end.

This conventional type of wiring unit has drawbacks. A first is that connecting the individual outlets entails a manual operation which requires some time to be performed. A second drawback is that it is then necessary to perform a test of the completed system which certifies the suitability of the system and its conformity to applicable statutory provisions.

Furthermore, the number of wirings is directly related to the number of outlets that one intends to connect to the same automatic breaker and this entails a sometimes large number of wires. The complexity of the wiring also leads to maintenance actions which are demanding from the point of view of time, since disconnecting an outlet from the automatic breaker entails the need to loosen respective terminals for each wire of the wiring.

An aim of the present invention is therefore to provide a modular quick wiring unit for electrical boards in which it is possible to minimize the wiring between the electric power distribution line and the individual outlets.

An object of the present invention is to provide a modular quick wiring unit for electrical boards which allows to produce wirings in a shorter time than terminal-based wiring systems of the type currently in use.

A further object is to allow to produce the wiring unambiguously without the possibility of error that is instead allowed by the conventional system.

A further object of the present invention is to provide a quick wiring unit for electrical boards which allows to provide connection points for multiple outlets which are located at a distance approved by applicable statutory provisions and therefore do not require system inspection.

A further object of the present invention is to provide a modular quick wiring unit in which it is possible to connect a plurality of electrical outlets arranged side by side.

A further object of the present invention is to provide a modular quick wiring unit which is highly reliable and relatively easy to provide at competitive costs.

This aim, these objects and others which will become apparent hereinafter are achieved by a modular quick wiring unit for electrical boards and the like, characterized in that it comprises at least one plate member which has a first plurality of recesses and a second plurality of recesses for connection to an electrical distribution line, by means of a first plug, and to an adjacent plate member, and a third plurality of recesses for connection, by means of a second plug, to an electrical outlet, for the connection of the electrical outlet to the electrical distribution line, the number of the recesses being equal to the number of conductors branched off the electrical distribution line.

Further characteristics and advantages of the invention will become apparent from the description of a preferred but not exclusive embodiment of the device according to the invention, illustrated only by way of non-limitative example in the accompanying drawings, wherein:
Fig. 1 is an exploded perspective view of the components of the modular quick wiring unit according to the present invention, adapted to be arranged in an electrical board;

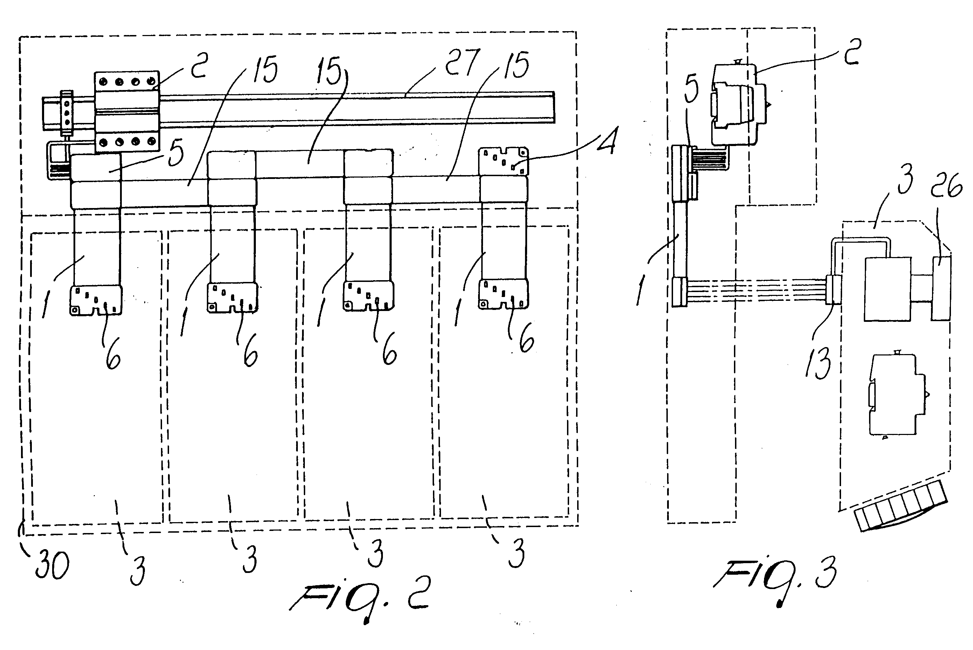

Fig. 2 is a front view of the electrical board shown in Fig. 1;

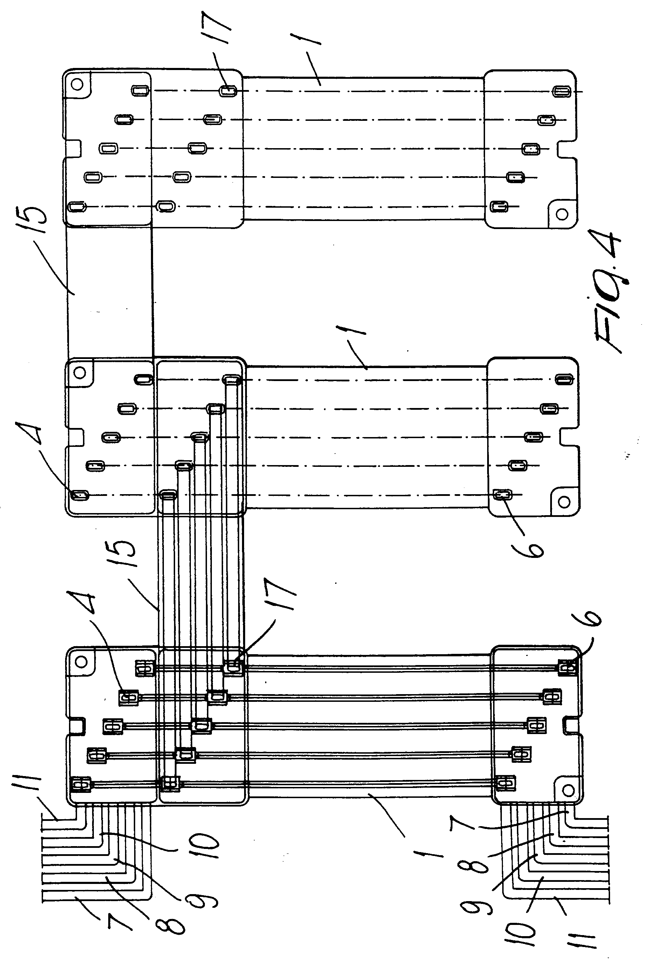

Fig. 3 is a side view of the electrical board shown in Figs. 1 and 2;

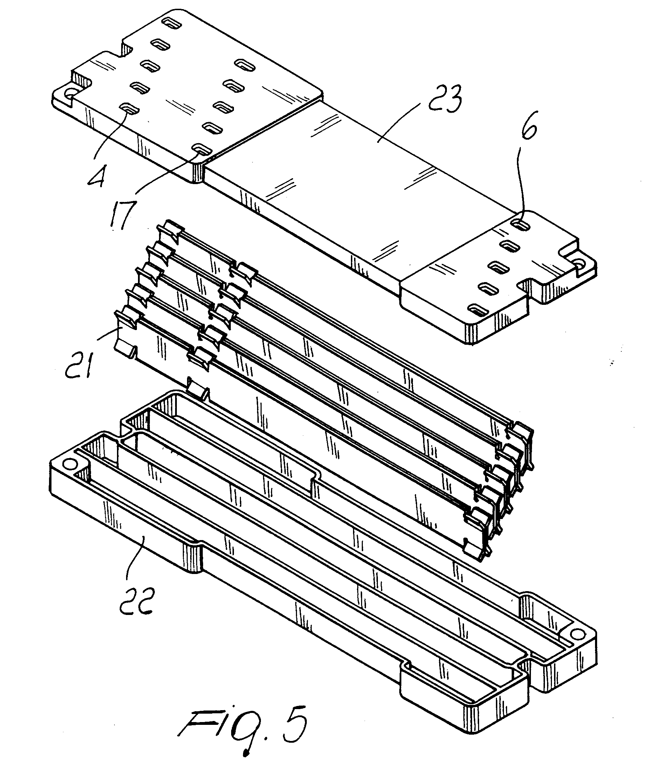

Fig. 4 is a front view of the components of the modular quick wiring unit according to the present invention;
Fig. 5 is an exploded perspective view of a plate member of the modular unit according to the present invention;
Fig. 6 is an exploded perspective view of a connecting member for mutually connecting plate members shown in Fig. 5; and
Fig. 7 is a perspective view of a connecting plug for automatic breakers, used in the quick wiring unit according to the present invention.

With reference to the above figures, the quick wiring unit according to the present invention includes at least one plate member 1 to which it is possible to connect the wiring that leads to the electrical distribution line after interposing the automatic breaker 2 and an electrical outlet, designated by the reference numeral 3 in the figures.

The plate member 1, which is substantially rectangular, is provided, at an upper end, with a first plurality of recesses 4 and with a second plurality of recesses 17 for connection to the electrical distribution line by means of a first plug 5 and for connection to a plate member which is adjacent thereto.

The plug 5 allows connection to the automatic breaker 2.

The number of recesses 4 is equal to the number of wires for connection between the automatic breaker 2 and the plate member 1. In particular, the figures show plate members 1 with five recesses 4, respectively for the phases, for the neutral and for the ground. The five wires are designated by the reference numerals 7, 8, 9, 10 and 11 respectively.

Likewise, a third plurality of recesses 6, equal in number to the recesses 4, is provided for the connection of a second plug 13 which is adapted to connect the electrical outlet 3 to the plate member 1 and therefore indirectly to the electrical distribution line.

The plug 13 is rigidly coupled to the electrical outlet 3 so that connection of the outlet 3 to the corresponding plate member 1 is straightforward and unambiguous.

The plate member 1, the electrical outlet 3 and the automatic safety breaker 2 are arranged within an electrical board 30.

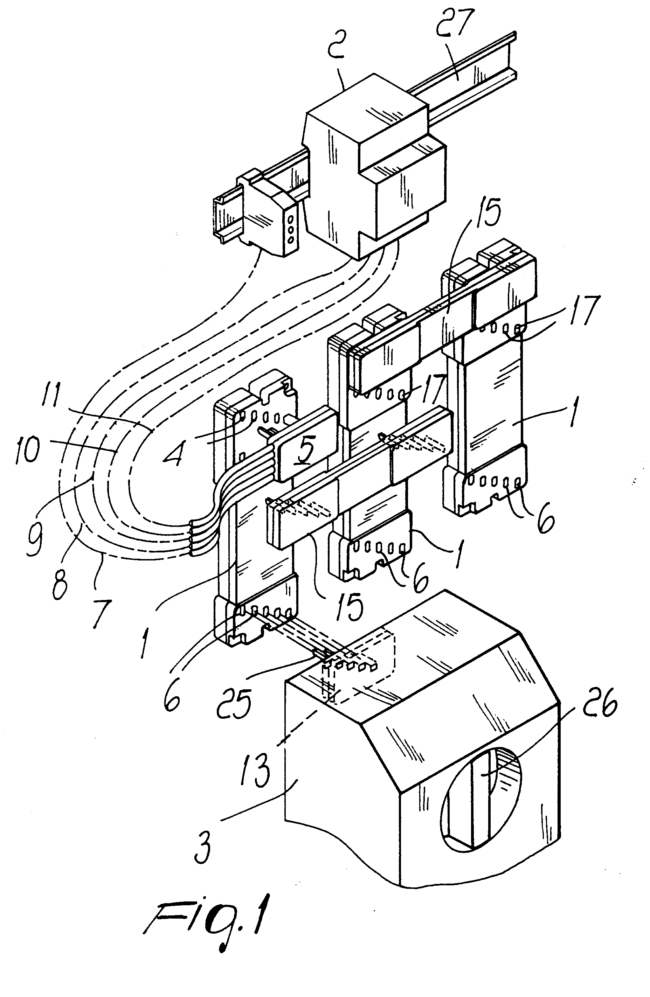

Fig. 1 illustrates three plate members 1, but it is of course possible to arrange side by side any number of plate members 1 by arranging them inside the electrical board 30. An equal number of electrical outlets 3 can be connected to the plate members.

The various plate members 1 are connected in pairs, by means of a connecting cross-member 15 which is substantially rectangular and is provided with a number of pins 16 which are adapted to enter the first plurality of recesses 4 or the second plurality of recesses 17 formed in the plate member 1 under the first plurality of recesses 4.

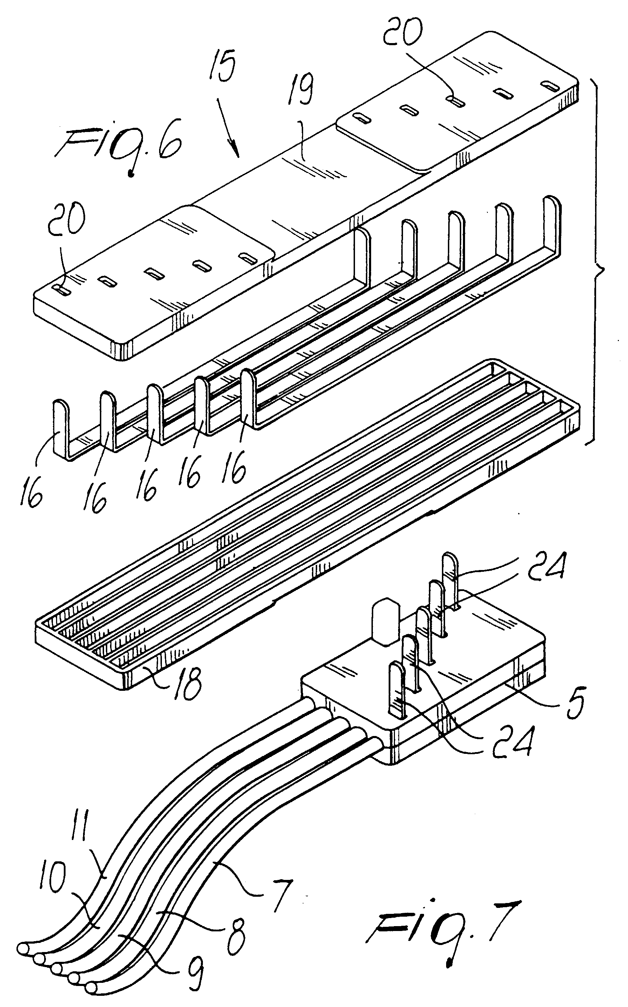

Fig. 6 is an exploded view of the components of the cross-member 15 for connecting a plate member 1 and the adjacent plate member.

The pins 16 of the cross-member are arranged in a base 18 provided with a plurality of slots for accommodating the pins 16. A cover 19 covers the base 18 and the pins 16 protrude from openings 20 thereof.

Fig. 5 is an exploded view of the components of each plate member 1. In detail, the lamination pack 21 that constitutes the parts for the insertion of the pins of the various plugs mentioned above is arranged in a base member 22 and is enclosed by a covering member 23 in which the first, second and third pluralities of recesses 4, 17 and 6 are formed.

The figure also shows one of the possible configurations of the lamination pack 21 which is suitable to receive the pins of the above mentioned plugs.

Pins 24 of the plug 5 for connecting the plate member 1 to the electrical distribution line enter the first plurality of recesses 4 (see Fig. 7).

Likewise, the plug 13 for connecting the electrical outlet 3 to the plate member 1 has a number of pins 25 which is equal to the third plurality of recesses 6 of the plate member 1.

The various figures illustrate an electrical outlet 3 of the industrial type which has a knob 26 for connecting power to the outlet. However, plugs of any kind can be used with the wiring unit according to the present invention.

The automatic breaker 2 shown in the figures is coupled to a supporting rail 27.

With reference to the above figures, the operation of the modular unit according to the present invention is as follows.

Multiple plate members 1 are arranged mutually adjacent and connected in pairs by means of the cross-members 15, which allow to supply power to the recesses of the plate members 1 once they are connected to the electrical distribution line.

One of the plate members (the first one from the left in the figures) 1 is connected, by means of the plug 5, to the electrical distribution line after passing through the automatic safety breaker 2 which is supported by the rail 27.

At this point, all the recesses 4, 6 and 17 of each plate member 1 are live and the electrical outlets 3, each of which is connected by means of the plug 13 to the corresponding plate member 1, are powered by the electrical distribution line, with the advantage that they can be easily removed (by disconnecting the plug 13 from the recesses 6).

Therefore, the wirings from the electrical distribution line to the various outlets 3 are dependent exclusively on the plug 5 and on the plugs 13 which are rigidly coupled to the electrical outlets 3.

In practice it has been observed that the quick wiring unit according to the invention fully achieves the intended aim, since it allows to provide wirings without the use of terminal strips, with the advantage of minimizing the wiring time and the length of the electrical conductors from the electrical distribution line to the individual outlets.

The particular plate members used allow to connect, by virtue of the same wiring, multiple electrical outlets arranged side by side at the distance prescribed according to applicable statutory provisions.

In this manner, by using the modular unit according to the present invention one is certain that the system complies with the standards and no further inspection needs to be performed.

The quick wiring unit thus conceived is susceptible of numerous modifications and variations, all of which are within the scope of the inventive concept; all the details may furthermore be replaced with other technically equivalent parts.

In practice, the materials used, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Modular quick wiring unit for electrical boards and the like, characterized in that it comprises at least one plate member (1) which has a first plurality of recesses (4) and a second plurality of recesses (17) for connection to an electrical distribution line, by means of a first plug (5), and to an adjacent plate member, and a third plurality of recesses (6) for connection, by means of a second plug (13), to an electrical outlet (3), for the connection of said electrical outlet (3) to the electrical distribution line, the number of said recesses being equal to the number of conductors branched off said electrical distribution line.

2. Modular unit according to claim 1, characterized in that it comprises a plurality of plate members (1) which are connected in pairs by means of connecting cross-members (15) in order to supply power to the recesses of each one of said plate members.

3. Modular unit according to claim 2, characterized in that each one of said connecting cross-member (15) comprises a base (18), which accommodates a number of pins (16) equal to the number of said conductors branched off the electrical distribution line, and a cover (19), which has a plurality of openings (20) through which said pins (16) protrude, for the insertion of said pins in said first plurality of recesses or in said second plurality of recesses of said plate members.

4. Modular unit according to one or more of the preceding claims, characterized in that said plate member (1) comprises a base member (22) which accommodates a lamination pack (21) which is covered by a covering member (23) provided with said first, second and third pluralities of recesses (4, 17, 6).

5. Modular unit according to one or more of the preceding claims, characterized in that said first plug (5) is provided with a number of pins (24) which is equal to the number of said first plurality of recesses of the plate member, in order to connect said plate member (1) to said electrical distribution line after passing through an automatic breaker.

6. Modular unit according to one or more of the preceding claims, characterized in that said second plug (13) is provided with a number of pins (25) which is equal to the number of said third plurality of recesses of the plate member, in order to connect said plate member to said electrical outlet, said second plug being rigidly coupled to said electrical outlet.

7. Modular unit according to one or more of the preceding claims, characterized in that an equal number of electrical outlets can be connected to said plurality of plate members (1), the supply of power to the recesses of said plate members being ensured by said cross-members (15) which connect said plate members in pairs.

8. Modular unit according to one or more of the preceding claims, characterized in that said cross-members (15) for connecting the plate members (1) in pairs have a length which allows to arrange electrical outlets in an adjacent position at a preset distance according to safety standards.

9. Modular unit according to one or more of the preceding claims, characterized in that said plate members (1) mutually connected in pairs by means of said connecting cross-members (15) and said automatic breaker (2) are housed in an electrical board.
